**Europäisches Patentamt**

**European Patent Office**

**Office européen des brevets**

(11) Veröffentlichungsnummer: **0 103 882**
**B1**

(12) # EUROPÄISCHE PATENTSCHRIFT

(45) Veröffentlichungstag der Patentschrift:
**15.07.87**

(51) Int. Cl.⁴: **F 24 D 3/00**

(21) Anmeldenummer: **83109284.6**

(22) Anmeldetag: **19.09.83**

(54) **Fussbodenheizung.**

(30) Priorität: **20.09.82 DE 3234793**

(43) Veröffentlichungstag der Anmeldung:
**28.03.84 Patentblatt 84/13**

(45) Bekanntmachung des Hinweises auf die Patenterteilung:
**15.07.87 Patentblatt 87/29**

(84) Benannte Vertragsstaaten:
**AT BE CH DE FR GB IT LI LU NL SE**

(56) Entgegenhaltungen:
**EP - A - 0 023 043**
**DE - A - 2 945 661**
**DE - A - 3 005 752**
**FR - A - 2 473 166**
**FR - A - 2 501 847**

(73) Patentinhaber: **THYSSEN PLASTIK ANGER KG, Anzinger Strasse 1, D-8000 München 80 (DE)**

(72) Erfinder: **Bauer, Peter, Kleinmenhaupten 71 1/8, D-8441 Konzell (DE)**

ACTORUM AG

**Beschreibung**

Die Erfindung bezieht sich auf eine Fussbodenheizung mit Matten oder hohlplattenförmige Kanäle aufweisenden Registern, die von einem Wärmeübertragungsmedium durchströmt und, auf der Rohdecke oder einer Dämmschicht verlegt sind, über einen Vor- und Rücklauf zu einer Verteilerstation ver- und entsorgt werden, wobei jedes Register nur an einem seiner Enden mit dem Vor- und Rücklauf verbunden ist und der Medienstrom am anderen Ende des Registers umgelenkt wird.

Für Fussbodenheizungen sind hohlplattenförmige und auch textilmattenartige Wärmetauscher bekannt, die über den gesamten Fussboden eines Raumes, sofern er ein rechteckiges Mass aufweist, ausgelegt werden. Weicht die Grundfläche des Raumes von der Rechteckform ab, so ergeben sich Probleme in mehrfacher Hinsicht. Zunächst sind die in vorgefertigten Grössen werksmässig hergestellten Wärmetauscher in vielen Fällen nicht so zuschneidbar, dass die gesamte Fläche des Raumes ausgelegt werden kann, wodurch sich in Randzonen Kältebrücken dadurch bilden, dass sich die Wärme in den von Wärmetauschern nicht überdeckten Teilen des Raumes nicht gleichmässig verteilen kann. Das bedeutet in ungünstigen Fällen sehr erhebliche Temperaturdifferenzen in bestimmten Zonen des Raumes, was eine Beeinträchtigung des Raumklimas mit negativen gesundheitlichen Folgen für die Bewohner bedeutet. Ist der Raum nicht rechteckig, was bei Altbauten besonders oft vorkommt, so ist es praktisch unmöglich, mit einer solcherart aufgebauten Fussbodenheizung den Raum den Bedürfnissen entsprechend zu beheizen. Weiterhin hat sich gezeigt, dass die Strömungsgeschwindigkeit bei den bekannten Wärmetauschern dieser Art niedrig ist, wobei die in Heizungsanlagen allgemein anfallenden Korrosionsprodukte zu einer erheblichen Verschlammung führen, welche in den langsam durchströmten äusseren Bereichen beginnend, sich bis zu den mittleren Bereichen des Wärmetauschers fortsetzt. Daraus folgt ebenfalls eine weniger ideale Beheizung des Raumes.

Man hat bereits versucht, diese Problematik durch besondere Anfertigung der Wärmetauscher im Aufmass zu steuern, jedoch sind solche Sonderanfertigungen in den meisten Fällen nicht vertretbar.

Andererseits ist mit der FR-A 2 473 166 ein Wärmetauscher vorgeschlagen worden, der aus langen, kompakt verlegten, hohlförmigen Platten besteht und insbesondere für den Einsatz als Sonnenkollektor, Wärmeabsorber, in Fermentationsanlagen oder auch als Konvektor usw., stets aber nur bei relativ niedrigen Temperaturen geeignet ist. Mit einem solchen Wärmetauscher ist jedoch die der Erfindung zugrunde liegende Aufgabe nicht lösbar.

Die EP-A 0 023 043 beschreibt ein plattenförmiges Bauteil für Fussboden- oder Deckenheizungen, das aus einem mäanderförmigen Kanäle aufweisenden Grundelement besteht, an das weitere gleiche Elemente anschliessbar sind, die jeweils einen Anschluss für den Zu- bzw. Abfluss des Heizmediums aufweisen. Auch diese Bauteile sind nicht geeignet, so verlegt zu werden, dass die gesamte Grundfläche eines Raumes damit bedeckt werden kann.

Mit der DE-A 3 005 752 wird eine sog. Multitube-Matte als Wärmetauscher, vorzugsweise für Fussbodenheizungen vorgeschlagen, die in einem mittleren Bereich mit Stegen ausgerüstet ist, die die einzelnen Röhren mit einander verbindet, wobei im Anschluss- und Umlenkbereich dieser Matte keine solchen Stege vorgesehen sind. Abgesehen davon, dass solche Matten nicht völlig flach verlegt werden können, sind die Strömungsverhältnisse darin, insbesondere im Umlenkbereich der Matten, problematisch und führen zu Verschlammung und Korrosion.

Hier will die Erfindung Abhilfe schaffen. Die Erfindung, wie sie in den Ansprüchen gekennzeichnet ist, löst die Aufgabe ein Fussbodenheizungssystem zu schaffen, das sowohl bei Neu- als auch bei Altbauten den Grundriss eines Raumes anpassbar ist, eine hohe Strömungsgeschwindigkeit mit gleichmässiger Verteilung des darin enthaltenen Wärmeübertragungsmediums zulässt, problemlos verlegbar und bei der Herstellung und Verlegung wirtschaftlich ist.

Erfindungsgemäss wird dies dadurch erreicht, dass die Register von einander gegenüber liegenden Seiten der Grundfläche des Raumes derart diese bedecken, dass jeweils ein plattenförmiges Register von der einen Seite neben ein solches von der anderen Seite ragendes zu liegen kommt, wobei das Wärmeübertragungsmedium auf einer Seite einer in den Vor- und Rücklauf vorgesehene Trennwand in das Register hinein und auf der anderen Seite in die Leitung zurückströmt.

Vorteilhafterweise sind die plattenförmigen Register in mehrere parallele Kanäle aufgeteilt.

Vorteilhafterweise weisen die plattenförmigen Register gleiche Länge auf.

Vorteilhafterweise sind die plattenförmigen Register in mehreren Einheitslängen ausgebildet.

Vorteilhafterweise sind die einzelnen plattenförmigen Register mittels Klammern miteinander verbunden.

Vorteilhafterweise sind die plattenförmigen Register als Teil einer grösseren Platte in Abständen jeweils einer Registerbreite und eines entsprechenden Freiraumes vorgesehen.

Vorteilhafterweise sind die plattenförmigen Register an ihren Seiten mit Ansätzen zum Einrasten einer Klammer bzw. des nächsten Registers versehen.

Vorteilhafterweise geschieht die Versorgung der einzelnen Registerplatten durch eine um die Grundfläche des Raumes verlaufende Vor- und Rücklaufleitung, an die sämtliche Register in Reihe geschaltet sind.

Nach einer Ausführungsvariante der Erfindung sind zwei Vor- und Rücklaufleitungen auf jeder Seite des Raumes vorgesehen, an die die einzelnen Registerplatten in Serienschaltung angeschlossen sind.

Nach einer weiteren Ausführungsvariante der Erfindung sind einzelne Registerplatten in Parallelschaltung mit dem Vor- und Rücklauf verbunden.

Vorteilhafterweise sind die einzelnen Registerplatten mittels Verbindungsstücken an den Vor- und Rücklauf angeschlossen.

Vorteilhafterweise sind die Verbindungsstücke mit einer Trennwand in Strömungsrichtung und einer Trennwand in Anströmrichtung der Registerplatten versehen.

Vorteilhafterweise ist der Vor- und Rücklauf am Ende mit einem Umlenkstück ausgerüstet.

Die Vorteile der mit der Erfindung vorgeschlagenen Fussbodenheizung sind insbesondere darin zu sehen, dass damit praktisch jeder Grundriss beherrscht werden kann und keine Kältebrücken auftreten, abgesehen davon, dass die vorgeschlagene Fussbodenheizung sowohl in Herstellung als auch Verlegung wirtschaftlich ist.

Die Erfindung ist nachstehend anhand eines in den Abbildungen dargestellten Ausführungsbeispieles näher erläutert. Es zeigt:

Fig. 1 einen rechteckigen Raum mit der erfindungsgemässen Fussbodenheizung

Fig. 2 einen unregelmässigen Grundriss mit der Fussbodenheizung

Fig. 3 einen Grundriss mit unterschiedlicheren Abmessungen als in Figur 2 dargestellt

Fig. 4 ein plattenförmiges Register

Fig. 5a u. b die perspektivische Darstellung zweier Ausführungsvarianten und

Fig. 6 eine perspektivische Darstellung mit Zu- und Ableitung

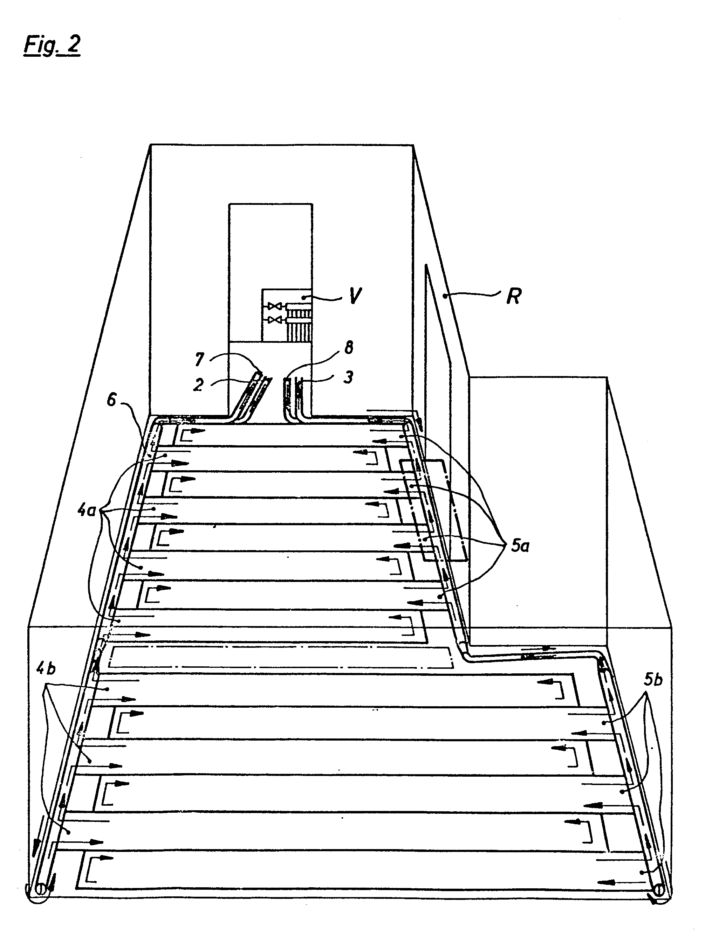

Fig. 2–10 eine vergrösserte Darstellung der Vor- und Rücklaufleitung mit Anschlüssen

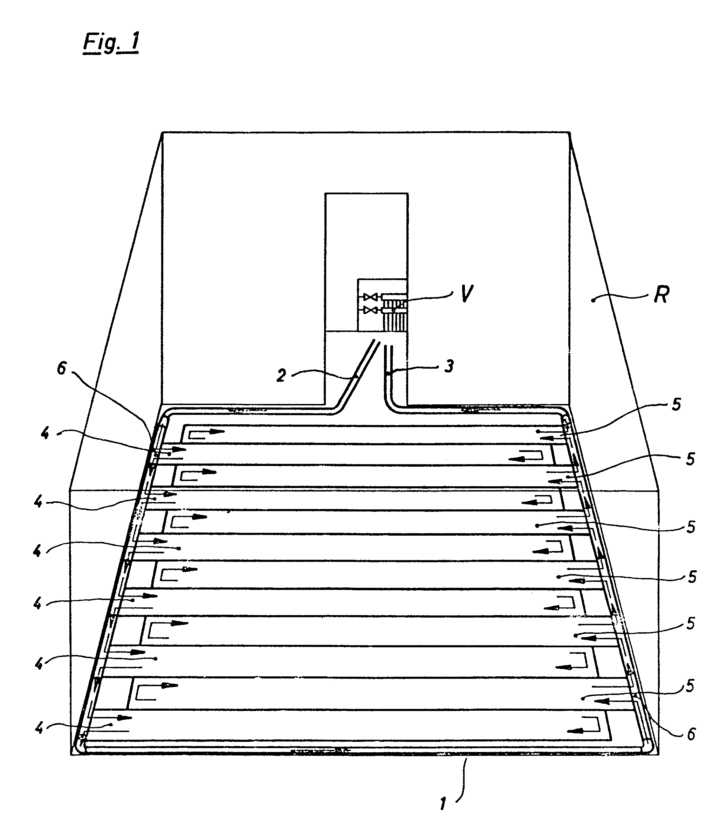

Wie aus Figur 1 ersichtlich, ist der Fussboden 1 des Raumes R mit einem Fussbodenheizungssystem belegt, das über den Verteiler V ver- und entsorgt wird.

Der Vorlauf ist mit 2, der Rücklauf mit 3 bezeichnet.Die einzelnen plattenförmigen Registerelemente sind mit 4 auf der linken Seite des Raumes und mit 5 auf der rechten Seite des Raumes bezeichnet. Die Anschlussstücke der Leitung sind mit 6 bezeichnet.

Von der Verteilerstation V wird Temperiermedium durch den Vorlauf 2 in das erste plattenförmige Register geführt, das es zunächst in Richtung nach rechts durchfliesst und dann nach links im Gegenstrom zurückfliesst. Dies wiederholt sich je nach Anzahl der vorgesehenen Kanäle. Danach strömt das Temperiermedium in das nächste plattenförmige Registerelement 4 usw. und so fort. Nachdem das Temperiermedium das letzte der Registerelemente 4 durchflossen hat, fliesst es entweder wie in Figur 1 dargestellt, zu den auf der anderen Seite des Fussboden 1 angeordneten plattenförmigen Registrerelemente 5, und nachdem es diese sämtliche durchflossen hat, durch den Rücklauf 3 zurück zur Verteilerstation.

Die Figur 2 zeigt eine Ausführungsvariante der Figur 1 mit einem Grundriss des Raumes R, der unterschiedlich ist. Es kommen dabei zwei verschieden lange, plattenförmige Register 4a und 4b bzw. 5 a und 5 b zum Einsatz. Hierbei ist die Versorgung und Entsorgung der plattenförmigen Register 4a und 4b bzw. 5a und 5b getrennt vorgenommen. Der Vorlauf 2 bzw. 8 mündet in ein Doppelrohr 6, das mit den einzelnen Registern verbunden ist. Die eine Seite des Doppelrohres dient dem Vorlauf und die andere Seite dem Rücklauf. Ebenso ist die andere Seite mit den plattenförmigen Registern 5a und 5b über den Vorlauf 8 und den Rücklauf 3 ver- bzw. entsorgt, und zwar ebenfalls über ein Doppelrohr.

Anstelle eines Doppelrohres 6 können beispielsweise auch zwei Einzelrohre bzw. ein Rohr als Vorlauf, das nach der Umkehrung im Rücklauf die einzelnen plattenförmigen Register 4a, 4b bzw. 5a, 5b, mit Temperiermedium versorgt, vorgesehen sein. Im Falle eines Doppelrohres sind verschiedene, bereits bekannte Doppelrohre einsetzbar, beispielsweise ein glattes Rohr mit einer Trennwand oder konzentrische Rohre usw. An den Stellen, an denen keinen Register 4 bzw. 5 vorgesehen sind, also dort, wo Abstände überbrückt werden müssen, wird ein glattes Rohr vorgesehen, während dort, wo die plattenförmigen Register 4 bzw. 5 angeschlossen werden, Anschlussstücke mit Trennwänden für Vor- und Rücklauf der Register eingesetzt sind.

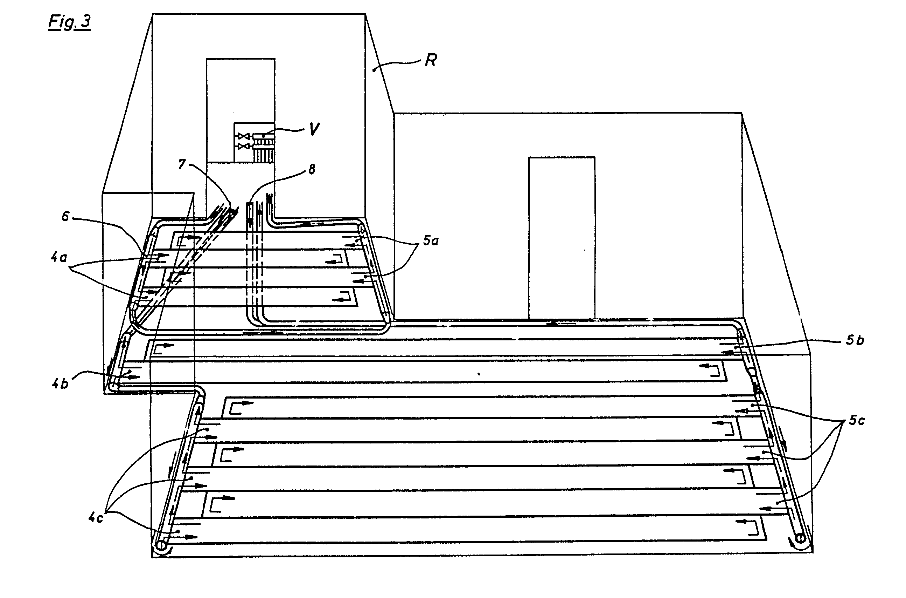

Figur 3 zeigt eine weitere Ausführungsvariante mit 3 verschieden langen plattenförmigen Registerelementen 4a, b, c bzw. 5a, b und c.

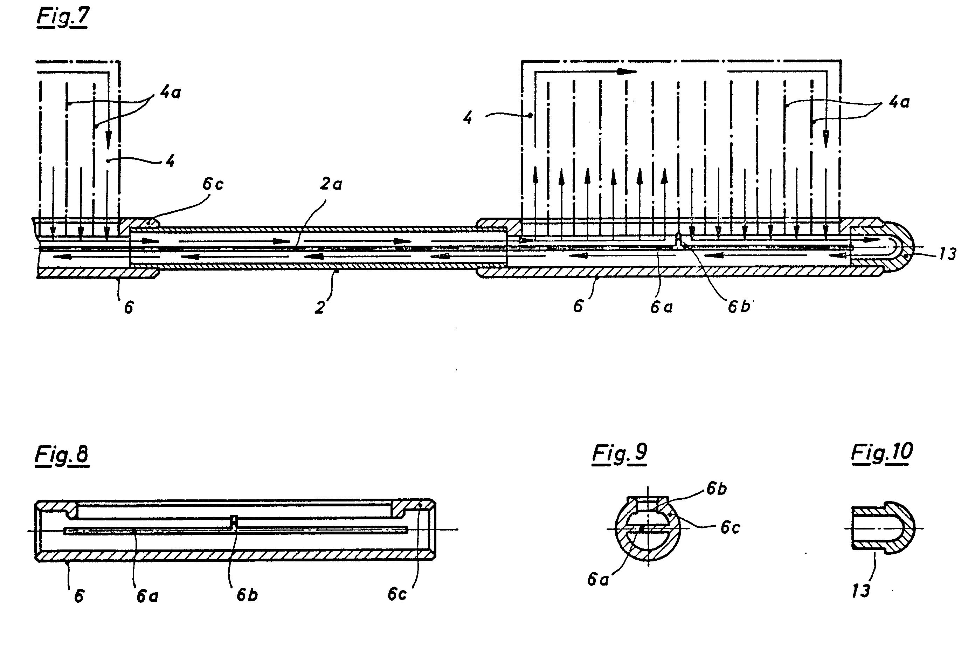

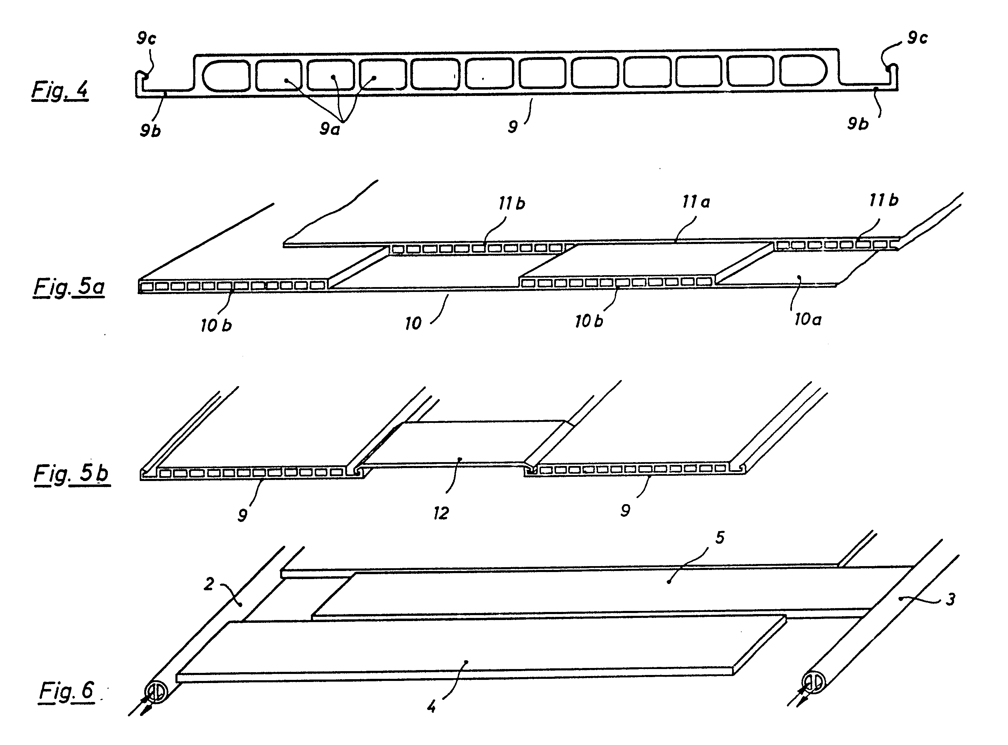

Die Figur 4 zeigt ein plattenförmiges Register 9, das mit Kanälen 9a für das Temperiermedium ausgerüstet ist. An beiden Seiten des plattenförmigen Registers 9 sind Fortsätze 9b mit aufstehenden Haken 9c angebracht, die, wie aus Figur 5b hervorgeht, dem Einrasten von Verbindungsklammern 12 dienen. Damit wird die Stabilität eines Registerverbandes bedeutend erhöht. In Figur 5a ist eine weitere Ausführungsvariante gezeigt, die ein plattenförmiges Register 10 zeigt, das im wesentlichen aus einer glatten Platte 10a besteht, die nach oben vorspringend, die Register 10b für das Temperiermedium trägt und auf die spiegelbildlich eine Platte 11 mit dem glatten Abschnitt 11a auf dem Register 10b und dem glatten Abschnitt 11b auf dem glatten Abschnitt 10a der Platte 10 zu liegen kommt. Auf diese Weise wird ebenfalls ein fester Verband erzielt.

Wie die Figur 6 zeigt, ist der Vorlauf für die plattenförmigen Register 4, 5 oder 9, 10, 11, mit dem Rücklauf in einem Rohr 2 oder 3 vorgesehen. Die Anschlüsse für die plattenförmigen Register 4, 5 usw. werden beispielsweise durch Einschweissen derselben in die Vor- und Rücklaufleitung 2, 3, vorgenommen. Eine Trennwand, die in der Abbildung nicht dargestellt ist, leitet das Temperiermedium zunächst in die eine Richtung durch die Kanäle des plattenförmigen Registers, bis diese am Ende umgeleitet werden und in Gegenrichtung zurückströmen, wieder in das Rohr 2 und von dort in das nächste plattenförmige Register usw., wie dies aus Figur 7 ersichtlich ist, mit einer Trennwand 6a ausgerüstet, die in Fortsetzung der Trennwand 2a des Vor- und Rücklaufs 2 liegt. Ein Fortsatz 6b in Richtung auf das plattenförmige Register 4 trennt die beiden Strömungsrichtungen in dem plattenförmigen Register und ermöglicht so den Kreislauf des Strömungsmittels.

In Figur 8 ist das Verbindungselement noch einmal deutlicher dargestellt. In die Endstücke 6c des Verbindungsstückes 6 wird das plattenförmige Register 4a durch eine geeignete Verbindungsart, beispielsweise Schweissen, eingesetzt.

Die Figur 9 zeigt einen Schnitt durch Figur 8, während die Figur 10 ein Endstück 13 zur Umkehr des Temperiermittels am Ende der Leitung 2 bzw. des Fussbodens 1 des Raumes R darstellt.

## Patentansprüche

1. Fussbodenheizung mit Matten oder hohlplattenförmige Kanäle aufweisenden Registern (4, 5), die von einem Wärmeübertragungsmedium durchströmt und auf der Rohdecke oder einer Dämmschicht verlegt sind und über mindestens einen Vor- und Rücklauf (2, 3) zu einer Verteilerstation (V) ver- und entsorgt werden, wobei jedes Register nur an einem seiner Enden mit dem Vor- und Rücklauf verbunden ist und der Medienstrom am anderen Ende des Registers (4) umgelenkt wird, dadurch gekennzeichnet, dass diese Register (4, 5) von einander gegenüberliegenden Seiten der Grundfläche des Raumes (1) aus diese derart bedecken, dass jeweils ein plattenförmiges Register (4) von der einen Seite neben ein solches von der anderen Seite (5) ragendes zu liegen kommt, wobei das Wärmeübertragungsmedium auf einer Seite einer im Vor- und Rücklauf (2, 3) vorgesehenen Trennwand (6b) in das Register (4) hinein und auf der anderen Seite zurückströmt.

2. Fussbodenheizung nach Anspruch 1, dadurch gekennzeichnet, dass die plattenförmigen Register (4) in mehrere parallele Kanäle aufgeteilt sind.

3. Fussbodenheizung nach Anspruch 1 und 2, dadurch gekennzeichnet, dass die plattenförmigen Register (4, 5) gleiche Längen aufweisen.

4. Fussbodenheizung nach Anspruch 1 bis 3, dadurch gekennzeichnet, dass die plattenförmigen Register (4, 5) in mehreren Einheitslängen (4a, b, 5a, b) ausgebildet sind.

5. Fussbodenheizung nach Anspruch 1 bis 4, dadurch gekennzeichnet, dass die einzelnen plattenförmigen Register (9) mittels Klammern (12) miteinander verbunden sind.

6. Fussbodenheizung nach Anspruch 1 bis 5, dadurch gekennzeichnet, dass die plattenförmigen Register (4, 5) als Teil einer grösseren Platte in Abständen jeweils einer Registerbreite und eines entsprechenden Freiraumes vorgesehen sind.

7. Fussbodenheizung nach Anspruch 1 bis 6, dadurch gekennzeichnet, dass die plattenförmigen Register (9) an ihren Seiten mit Ansätzen (9b) zum Einrasten einer Klammer (12) bzw. des nächsten Registers (9) versehen sind.

8. Fussbodenheizung nach Anspruch 1 bis 7, dadurch gekennzeichnet, dass die Versorgung der einzelnen Registerplatten durch eine um die Grundfläche des Raumes (1) verlaufende Vor- und Rücklaufleitung (2, 3), an die sämtlichen Register (4, 5) in Reihe geschaltet sind, geschieht.

9. Fussbodenheizung nach Anspruch 1 bis 7, dadurch gekennzeichnet, dass zwei Vor- und Rücklaufleitungen (2, 8/3) auf jeder Seite des Raumes (1) vorgesehen sind, an die einzelnen Registerplatten in Serienschaltung angeschlossen sind.

10. Fussbodenheizung nach Anspruch 1 bis 7, dadurch gekennzeichnet, dass einzelne Register (4, 5) in Parallelschaltung mit dem Vor- und Rücklauf (2, 3) verbunden sind.

11. Fussbodenheizung nach Anspruch 1 bis 7 und einem der Ansprüche 8 bis 10, dadurch gekennzeichnet, dass die einzelnen Register (4, 5) mittels Verbindungsstücken (6) an den Vor- und Rücklauf (2, 3) angeschlossen sind.

12. Fussbodenheizung nach Anspruch 11, dadurch gekennzeichnet, dass die Verbindungsstücke (6) mit einer Trennwand (6a) in Strömungsrichtung und einer Trennwand (6b) in Anströmrichtung der Register (4, 5) versehen sind.

13. Fussbodenheizung nach Anspruch 9, dadurch gekennzeichnet, dass der Vor- und Rücklauf (2, 3) am Ende mit einem Umlenkstück ausgerüstet ist.

## Claims

1. Floor heating with heating elements (4, 5), which display mats or channels in the shape of hollow plates, are flowed through by a heat transfer medium, disposed on the bare ceiling or an insulating layer and are supplied and drained by way of at least one forward and return run (2, 3) to a distributor station (V), wherein each heating element is connected with the forward and return run at only one of its ends and the medium current is deflected at the other end of the heating element (4), characterised thereby, that these heating elements (4, 5) starting out from mutually opposite sides of the plan area of the room (1) cover this in such a manner that a plate-shaped heating element (4) from the one side each time comes to lie besides such projecting from the other side (5), wherein the heat transfer medium flows into the heating element (4) on one side of a separating wall (6b) provided in the forward and return run (2, 3) and flows back on the other side.

2. Floor heating according to claim 1, characterised thereby, that the plate-shaped heating elements (4) are divided up into several channels.

3. Floor heating according to claim 1 and 2, characterised thereby, that the plate-shaped heating elements (4, 5) display equal lengths.

4. Floor heating according to claim 1 to 3, characterised thereby, that the plate-shaped heating elements (4, 5), are constructed in several unit lengths (4a, b, 5a, b).

5. Floor heating according to claim 1 to 4, characterised thereby, that the individual plate-shaped heating elements (9) are connected one with the other by means of brackets (12).

6. Floor heating according to claim 1 to 5, characterised thereby, that the plate-shaped heating elements (4, 5) are provided as part of a larger plate at spacings each time of the width of one heating element and an appropriate free space.

7. Floor heating according to claim 1 to 6, characterised thereby, that the plate-shaped heating elements (9) are provided at their sides with projections (9b) for the notching-in of a bracket or of the next heating element (9).

8. Floor heating according to claim 1 to 7, characterised thereby, that the supply of the individual heating element plates takes place through a forward and return run duct (2, 3), which extends around the plan area of the room (1) and to which all heating elements (4, 5) are connected in series.

9. Floor heating according to claim 1 to 7, characterised thereby, that two forward and return run ducts (2, 8/3), to which the individual heating element plates are connected in series connection, are provided on each side of the room (1).

10. Floor heating according to claim 1 to 7, characterised thereby, that individual heating elements (4, 5) are connected with the forward and return run (2, 3) in parallel connection.

11. Floor heating according to claim 1 to 7 and one of the claims 8 to 10, characterised thereby, that the individual heating elements (4, 5) are connected with the forward and return run (2, 3) by means of connecting pieces (6).

12. Floor heating according to claim 11, characterised thereby, that the connecting pieces (6) are provided with a separating wall (6a) in flow direction and a separating wall in approach flow direction of the heating elements (4, 5).

13. Floor heating according to claim 9, characterised thereby, that the forward and return run (2, 3) is provided with a deflecting piece at the end.

**Revendications**

1. Chauffage par le sol à l'aide de registres (4, 5) présentant des canaux en forme de nattes ou de plaques creuses, qui sont parcourus par un fluide de transfert de chaleur et qui sont posés sur le sol brut ou sur une couche d'isolation et qui sont raccordés par au moins un circuit d'alimentation et de retour (2, 3) à une station de répartition (V), chaque registre étant relié uniquement à l'une de ses extrémités au circuit d'alimentation et de retour et l'écoulement de fluide changeant de direction à l'autre extrémité du registre (4), caractérisé en ce que ces registres (4, 5) se recouvrent mutuellement à partir des faces opposées de la projection en plan du local (1), de telle façon que chacun des registres en forme de plaque (4) de l'un des côtés vienne se placer à côté d'un autre registre faisant saillie de l'autre côté (5), le fluide de transfert de chaleur s'écoulant dans le registre (4) à l'aller d'un côté d'une paroi de séparation (6b) prévue dans le circuit d'alimentation et de retour (2, 3) et de l'autre côté au retour.

2. Chauffage par le sol selon la revendication 1, caractérisé en ce que les registres en forme de plaque sont divisés en plusieurs canaux parallèles.

3. Chauffage par le sol selon la revendication 1 et 2, caractérisé en ce que les registres en forme de plaque (4, 5) présentent la même longueur.

4. Chauffage par le sol selon la revendication 1 à 3, caractérisé en ce que les registres en forme de plaque sont réalisés en plusieurs longueurs unités (4a, b, 5a, b).

5. Chauffage par le sol selon la revendication 1 à 4, caractérisé en ce que les registres individuels en forme de plaque (9) sont reliés les uns aux autres à l'aide de pinces (12).

6. Chauffage par le sol selon la revendication 1 à 5, caractérisé en ce que les registres en forme de plaque (4, 5) faisant partie d'une plaque de plus grande dimension, sont placés à distance chacun d'une largeur de registre et sont munis d'un espace libre correspondant.

7. Chauffage par le sol selon la revendication 1 à 6, caractérisé en ce que les registres en forme de plaque (9) sont munis latéralement de prolongements (9b) pour l'accrochage d'une pince (12) ou respectivement du registre suivant (9).

8. Chauffage par le sol selon la revendication 1 à 7, caractérisé en ce que l'alimentation des plaques de registres individuelles est réalisée par une conduite d'alimentation et de retour (2, 3) courant sur la surface en plan du local (1), et sont connectés en série aux registres de même type (4, 5).

9. Chauffage par le sol selon la revendication 1 à 7, caractérisé en ce qu'il est prévu deux conduites d'amenée et de retour (2, 8/3) de chaque côté du local (1) et auxquelles les plaques de registres individuelles sont reliées en série.

10. Chauffage par le sol selon la revendication 1 à 7, caractérisé en ce que les registres individuels (4, 5) sont reliés aux conduites d'amenée et de retour (2, 3) en couplage parallèle.

11. Chauffage par le sol selon la revendication 1 à 7 et l'une des revendications 8 à 10, caractérisé en ce que les registres individuels (4, 5) sont reliés à l'aide de pièces de liaison (6) au circuit d'amenée et de retour (2, 3).

12. Chauffage par le sol selon la revendication 11, caractérisé en ce que la pièce de liaison (6) est munie d'une paroi de séparation (6a) dans la direction d'écoulement et d'une paroi de séparation (6b) dans la direction d'écoulement de répartition du registre (4, 5).

13. Chauffage par le sol selon la revendication 9, caractérisé en ce que le circuit d'alimentation et de retour (2, 3) est muni à l'extrémité d'une pièce de changement de direction.

_Fig._ 1

## Fig. 2

*Fig.3*

## Fig.7

## Fig.8

## Fig.9

## Fig.10

0 103 882

Fig. 4

Fig. 5a

Fig. 5b

Fig. 6

9c    9c
9b    9a    9    9b

11b    11a    11b
10b    10    10b    10a

9    12    9

2    5    3
4

15

0 103 882